# EUROPÄISCHE PATENTSCHRIFT

(11) **EP 0 582 047 B1**
(45) Veröffentlichungstag und Bekanntmachung des Hinweises auf die Patenterteilung: **14.08.1996**
(21) Anmeldenummer: 93108022.0
(22) Anmeldetag: 17.05.1993
(51) Int. Cl.: B65G 19/02

(54) **Hängefördereinrichtung**
Overhead conveyor system
Système de convoyeur aériens

(30) Priorität: 06.08.1992 DE 9210549 U
(43) Veröffentlichungstag der Anmeldung: 09.02.1994
(73) Patentinhaber: RSL LOGISTIK GMBH & CO, D-86899 Landsberg (DE)
(72) Erfinder: Robu, Johann, W-8037 Olching (DE); Enderlein, Robby, W-8910 Landsberg/Lech (DE)
(74) Vertreter: Grünecker, Kinkeldey, Stockmair & Schwanhäusser Anwaltssozietät

(56) Entgegenhaltungen:
- DE-A- 2 910 780
- FR-A- 2 142 980

## Beschreibung

Die Erfindung bezieht sich auf eine Hängefördereinrichtung der im Oberbegriff von Anspruch 1 erläuterten Art.

Eine derartige Hängefördereinrichtung ist aus der DE-A-36 37 287 bekannt. Das Fördermittel der bekannten Hängefördereinrichtung weist einen C-förmigen Bügel auf, an dessen beiden freien Enden jeweils eine nach innen wegstehende Laufrolle drehbar gelagert ist. Mit diesen Laufrollen rollt das bekannte Fördermittel auf einer Profilschiene mit zwei dachförmig aneinander grenzenden Laufbahnen ab. Beim Betrieb in der mittenabgehängten Position auf dieser dachförmigen Laufschiene erstreckt sich die Symmetrieebene zwischen den beiden Laufrollen im wesentlichen senkrecht. Um das bekannte Fördermittel möglichst ruckfrei auch durch enge Kurven fördern zu können, ist eine Wechseleinrichtung vorgesehen, die das Fördermittel um eine in Förderrichtung liegende Achse nach rechts oder links derart verdreht, daß die Symmetrieebene zwischen den Laufrollen schräg verläuft und eine der Laufrollen auf einer horizontalen Laufbahn abrollen kann. Für die andere Laufrolle ist eine weitere Laufbahn vorgesehen, auf der sich diese Laufrolle abstützt, um zu verhindern, daß sich das Fördermittel unter Schwerkrafteinfluß zurückdreht. Durch die Wechseleinrichtung der bekannten Hängefördereinrichtung kann zwar der Aufgabebereich stark erweitert werden, die Konstruktion ist jedoch noch nicht zufriedenstellend.

Aus der DE-A-22 55 251 ist weiterhin eine Hängefördereinrichtung bekannt, die nur in Seitenabhängung betrieben werden kann. Das Fördermittel der bekannten Hängefördereinrichtung weist ein angenähert C-förmiges Lagerteil auf, das die Schiene von einer Seite her umgreift, wobei an einem freien Ende eine einzige Laufrolle angeordnet ist und das andere freie Ende mit einer Befestigungseinrichtung für die zu fördernden Gegenstände versehen ist. Die Umfangsfläche der Laufrolle weist ein Innenprofil auf, in das ein Außenprofil der Laufschiene eingreifen kann, um ein seitliches Wegkippen zu vermeiden. Die Anwendungsgebiete dieses Hängefördersystems sind begrenzt. Sobald im Schienenweg Weichen vorgesehen sind, müssen die Lagerteile immer an der gleichen Seite der Schiene angeordnet sein, da sie ansonsten mit den Weichen kollidieren. Auch erfordert das bekannte Hängefördersystem besonders ausgestaltete Weichen, wenn die Fördermittel auf der gleichen Schiene vor- und rückwärts gefördert werden sollen.

Aus der US-A-3 777 872 sind Fördermittel bekannt, die ein in der Symmetrieebene zwischen zwei Laufrollen angeordnetes Lagerteil und zwei beidseitig vom Lagerteil nach außen wegstehende Laufrollen aufweisen. Die bekannten Fördermittel laufen jedoch als sogenannte Innenläufer im Inneren einer Profilschiene, die einen mittigen Schlitz aufweist, durch Gen sich das Lagerteil erstreckt, und zwei Laufbahnen hat, die beidseitig des Schlitzes angeordnet sind. Die Laufrollen jedes Fördermittels sind immer mit beiden Laufbahnen in Eingriff. Hängefördereinrichtungen für diese Innenläufer erfordern jedoch beispielsweise relativ komplizierte Weichen.

Weiterhin ist es beispielsweise aus der DE-A-29 10 780 oder der FR-A-2 142 980 bekannt, zum Umsetzen der Fördermittel von einer Förderstrecke auf eine andere Förderstrecke gesonderte Laufrollen vorzusehen, die jedoch nicht zum Transport des Fördermittels in Seitenabhängung über den Schienenweg mit Geradstrecken, Kurven und/oder Weichen dienen.

Der Erfindung liegt somit die Aufgabe zugrunde, eine Hängefördereinrichtung der genannten Art konstruktiv zu vereinfachen und funktionssicher auszugestalten.

Die Aufgabe wird durch die kennzeichnenden Merkmale des Anspruchs 1 gelöst.

Durch die erfindungsgemäße Kombination eines Fördermittels mit symmetrisch angeordneten Laufrollen mit asymmetrischen Schienen, d.h. Schienen mit nur einer Laufbahn, wobei das Fördermittel in Seitenabhängung auf einem derart ausgestalteten Schienenweg läuft, und durch die Möglichkeit, die jeweils mit der Laufbahn in Eingriff tretende Laufrolle zu wechseln, können Weichen oder Abzweigungen konstruktiv äußerst einfach ausgestaltet sein. Darüber hinaus kann das Fördermittel problemlos an nahzu jeder Stelle des Schienenwegs von der Schiene abgehoben und in gleicher Richtung oder um 180° um eine senkrechte Achse verdreht an wiederum nahezu jeder Stelle im Schienenweg wieder auf die Laufbahn aufgesetzt werden. Das im Stand der Technik notwendige zeitaufwendige Einfädeln auf bzw. in die Schienen entfällt.

Die in den Ansprüchen 2 bis 5 alternativ angegebenen Ausgestaltungen der Laufrollen und Laufbahnen dient einerseits dazu, das Fördermittel sicher auf der Schiene zu halten, obwohl nur eine Laufrolle mit der Laufbahn in Eingriff steht, andererseits wird damit die Kurvengängigkeit des Fördermittels auch in engen Kurven stark verbessert.

Die Ansprüche 6 und 7 beschreiben alternative Ausgestaltungen für die Abstützeinrichtung.

Zweckmäßigerweise wird die Abstützeinrichtung gemäß den Ansprüchen 8 bis 10 gleichzeitig zum Antrieb der Fördermittel benutzt.

Die zusätzlich zu den Laufrollen vorgesehene zweite Laufeinrichtung gemäß den Ansprüchen 11 und 12 vergrößert das Anwendungsgebiet weiter.

Die Kippsicherung gemäß Anspruch 13 verhindert, daß das Fördermittel bei einem seitlichen Stoß oder Schlag von der Schiene fällt.

Die Ansprüche 14 bis 20 beschreiben konstruktiv besonders einfache Weichen oder Abzweigungen für die erfindungsgemäße Hängefördereinrichtung. Insbesondere der Umsetzer gemäß den Ansprüchen 17 bis 19 erlaubt eine äußerst kurze Schaltzeit, so daß einzelne Fördermittel aus einer Reihe von Fördermitteln, die unmittelbar hintereinander ankommen, gezielt ausgeschleust werden können. Derartig kurze Schaltzeiten sind mit keiner der im obengenannten Stand der Technik zu verwendenden Weichen zu erreichen; diese erfordern auf jeden Fall einen größeren Abstand zwischen dem umzusetzenden Fördermittel und seinen Vor- und Nachläufern.

Mit der Ausgestaltung nach den Ansprüchen 21 bis 25 können mit dem erfindungsgemäßen Hängefördersystem äußerst enge Kurvenradien verwirklicht werden.

Da die erfindungsgemäßen Fördermittel wahlweise auf der einen oder anderen Laufrolle allein laufen können, ist der in Anspruch 26 angegebene, direkte Übergang von Fördermitteln zwischen zwei Schienenkreisen auf konstruktiv äußerst einfache Weise möglich.

Durch die Ausgestaltung der Führung für das Reibband gemäß Anspruch 27 kann dieses auf einfache Weise durch schräges Einsetzen und Anklappen in die Führung eingesetzt bzw. durch die obengenannten Schritte in umgekehrter Richtung, aus der Führung entfernt werden.

Der in den Ansprüchen 28 bis 30 beschriebene, formveränderbare Körper dient dazu, die Fördermittel außer Antriebseingriff mit dem Reibband zu bringen, um diese beispielsweise abnehmen zu können.

Das gemäß den Ansprüchen 31 bis 33 zusätzlich vorgesehene Reibmaterial verbessert die Mitnahmewirkung eines Reibbandantriebs.

Ausführungsbeispiele der Erfindung werden nachfolgend anhand der Zeichnungen näher erläutert. Es zeigen:
- Fig. 1: eine perspektivische und schematische Darstellung eines Teils eines ersten Ausführungsbeispieles einer erfindungsgemäßen Hängefördereinrichtung,
- Fig. 2: das Fördermittel aus Fig. 1 in Vorderansicht gemäß Schnitt II-II,
- Fig. 3: den Schnitt III-III aus Fig. 1,
- Fig. 4: eine schematische Darstellung des Umsetzers aus Fig. 3,
- Fig. 5: eine schematische Darstellung eines weiteren Umsetzers,
- Fig. 6: eine schematische Darstellung eines weiteren Fördermittels,
- Fig. 7: eine schematische Darstellung eines weiteren Umsetzers, und
- Fig. 8: eine Draufsicht auf Fig. 7.
- Fig. 9: ein weiteres Ausführungsbeispiel in einer Darstellung ähnlich Fig. 2, und
- Fig. 10: den Schnitt X-X aus Fig. 9 in vergrößerter Darstellung.

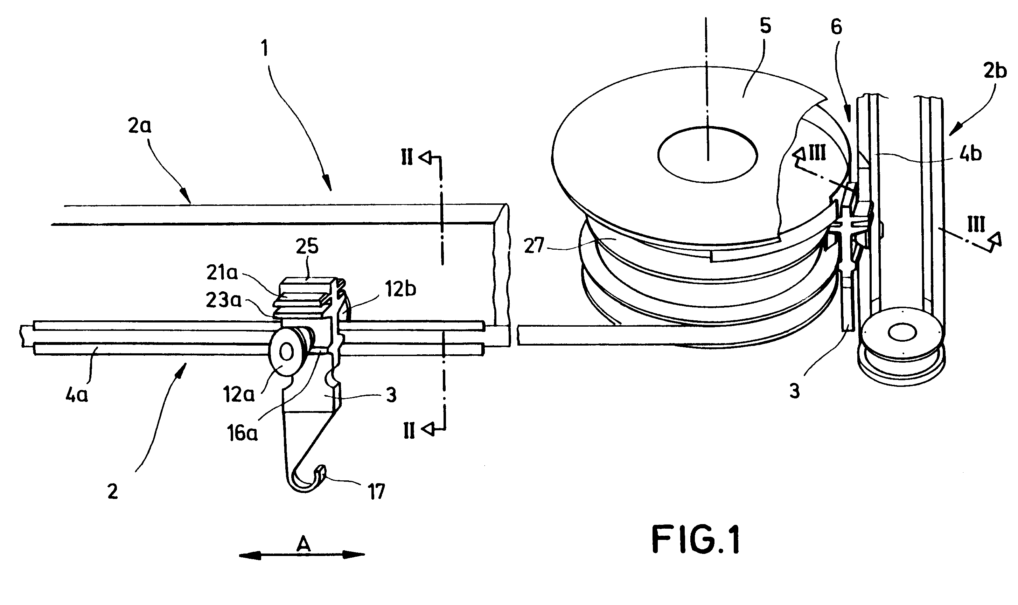

Aus Fig. 1 ist eine Hängefördereinrichtung 1 ersichtlich, die einen Schienenweg 2 und auf dem Schienenweg 2 abrollende Fördermittel 3 aufweist. Der Schienenweg 2 weist im dargestellten Ausführungsbeispiel einen ersten Schienehkreis 2a und eine zweite Schienenanordnung 2b auf. Vom ersten Schienenkreis 2a ist lediglich ein Teil einer Schiene 4 für Geradeausfahrt, eine Umlenktrommel 5 für Kurvenfahrt und einen lediglich schematisch angedeuteten, als Weiche wirkenden Umsetzer 6 dargestellt. Die zweite Schienenanordnung 2b verläuft mit einer Schiene 4b für Geradeausfahrt tangential zur Umlenktrommel 5. Die weitere Ausgestaltung der zweiten Schienenanordnung 2b ist unkritisch. So kann dieser beispielsweise, wie dargestellt, nur zur linearen Förderung bzw. zur Übermittlung auf andere Schienen dienen oder analog des ersten Schienenkreises 2a mit Umlenktrommeln für einen vollständigen Umlauf der Fördermittel 3 ausgestaltet sein.

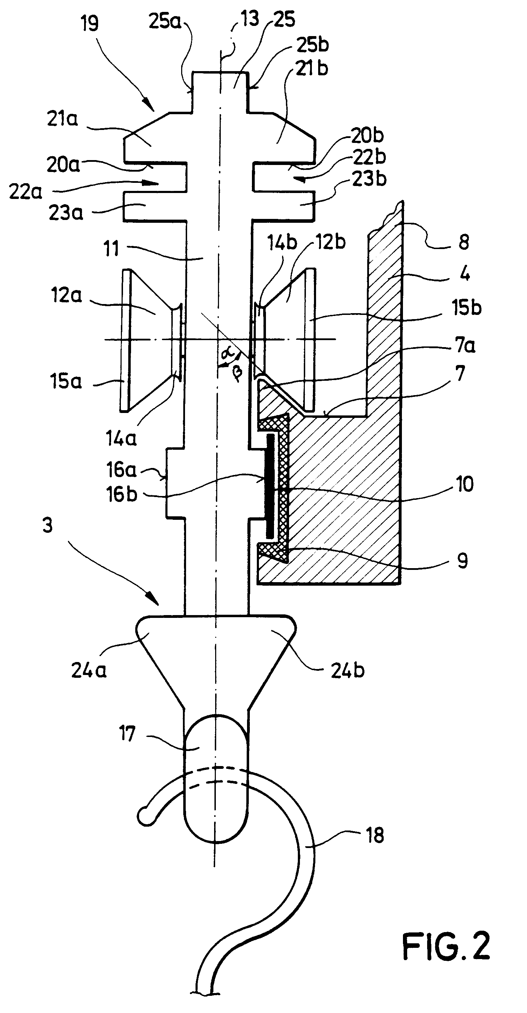

Wie in Fig. 2 näher dargestellt, ist die Schiene 4 der Geradstrecke und anderer Strecken, beispielsweise von Bögen oder dgl. asymmetrisch ausgebildet und mit einer Laufbahn 7 für das Fördermittel 3 versehen. Die Laufbahn 7 ist über einen Hängeträger 8 an der Decke oder einem gesonderten Gerüst abgehängt und erstreckt sich zumindest über einen Teil ihrer Breite vom Hängeträger 8 nach schräg oben außen, wo sie in einer abgerundeten Spitze 7a endet. Unterhalb der Laufbahn 7 ist eine Führung 9 vorgesehen, in der ein senkrecht angeordnetes Reibband 10 verläuft.

Das Fördermittel 3 weist ein Lagerteil 11 in Form eines senkrechten Trägers auf, von dem beidseitig jeweils eine kegelstumpfförmige Laufrolle 12a bzw. 12b vorsteht. Die Laufrollen 12a, 12b sind bezüglich einer sich durch die Längsmittellinie des Lagerteils 11 erstreckenden, senkrechten Symmetrieebene 13 symmetrisch und an gegenüber-liegenden Seiten des Lagerteils 11 mit horizontalen Drehachsen gelagert. Jede der Laufrollen 12a, 12b ist mit ihrem schmaleren Ende der kegelstumpfförmigen Gestalt dem Lagerteil 11 zugewandt, wobei an dieser Stelle jeweils eine Kehle 14a, 14b ausgebildet ist, mit der die Laufrolle auf der Spitze 7a der Laufbahn 7 aufsitzt. Der Winkel α, den eine Mantellinie der Laufrollen 12a, 12b mit der Symmetrieebene 13 einschließt beträgt bevorzugt 45°. Auch der geneigte Teil der Laufbahn 7 verläuft unter diesem Winkel. Am breiten Ende jeder Laufrolle 12a, 12b schließt sich jeweils ein zylindrischer Abschnitt 15a, 15b an.

Unterhalb der Laufrollen 12a, 12b im Bereich des Reibbandes 10, stehen vom Lagerteil 11 Reibflächen 16a, 16b vor, die symmetrisch und mit Abstand zur Symmetrieebene 13 angeordnet sind und parallel zur Förderrichtung A (s. Fig. 1) verlaufen. Die Reibflächen 16a, 16b treten mit dem Reibband 10 zum Antrieb des Fördermittels 3 in Eingriff.

In Verlängerung der Symmetrieebene 13 ist am unteren Ende des Lagerteils 11 ein Haken 17 als Befestigungseinrichtung für zu fördernde Gegenstände, dargestellt ist ein Teil eines Kleiderbügels 18, angeformt. Durch die Anordnung des Hakens 17 in der Symmetrieebene 13 und unterhalb der Reibflächen 16a, 16b wird in der in Fig. 2 dargestellten Position des Fördermittels 3 die Reibfläche 16b gegen das Reibband 10 gedrückt, wodurch einerseits eine gute Mitnahme während der Bewegung des Reibbandes 10 gesichert und andererseits das Fördermittel 3 zusätzlich an der Schiene 4 abgestützt wird.

Oberhalb der Laufrollen 12a, 12b ist am Fördermittel 3 eine weitere Laufeinrichtung 19, alternativ oder zusätzlich zu den Laufrollen 12a, 12b, vorgesehen. Die weitere Laufeinrichtung 19 weist zwei waagerechte, symmetrisch zur Symmetrieebene 13 angeordnete, nach unten weisende Gleitflächen 20a und 20b auf. Die Gleitflächen 20a, 20b bilden jeweils die Unterseiten zweier symmetrisch zur Symmetrieebene 13 beidseitig vom Lagerteil 11 nach außen wegstehender Stegplatten 21a, 21b. Unterhalb dieser Stegplatten 21a, 21b und mit Zwischenraum 22a, 22b sind jeweils zweite Stegplatten 23a, 23b vorgesehen, deren Größe etwa der der Stegplatten 21a, 21b entspricht. Die unteren Stege 23a, 23b dienen als Kippsicherung.

Eine weitere Kippsicherung in Form zweier symmetrisch zur Symmetrieebene 13 seitlich nach außen vorstehender Vorsprünge 24a, 24b ist am Lagerteil 11 unterhalb der Reibflächen 16a, 16b des Reibantriebs vorgesehen. Die Vorsprünge 24a, 24b stehen soweit zur Seite, daß sie die Schiene 4 untergreifen.

Auf der Oberseite des Lagerteils 11 ist ein sich in Förderrichtung A erstreckender und in der Symmetrieebene 13 liegender Längssteg 25 mit zwei parallel zur Symmetrieebene 13 verlaufenden, zur Seite weisenden Stegflächen 25a bzw. 25b angeformt.

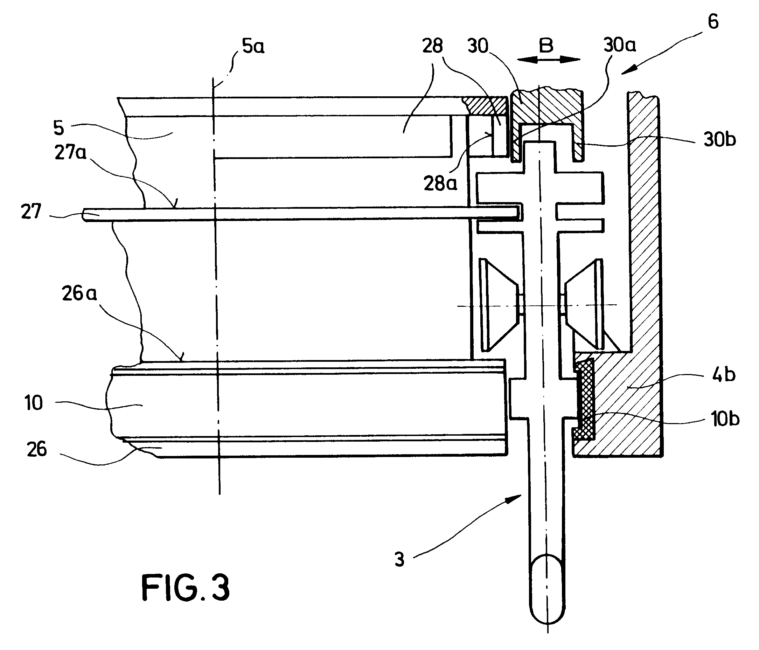

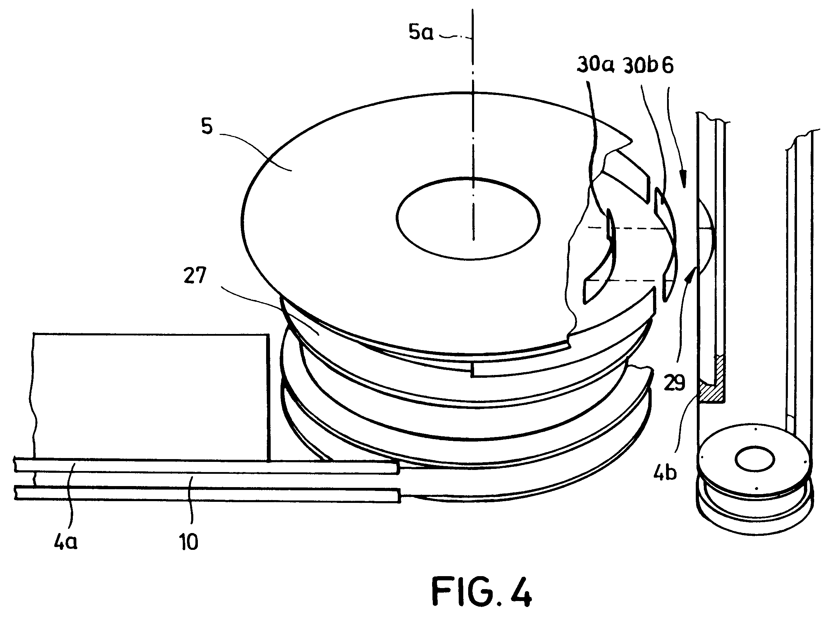

Die Fig. 3 und 4 zeigen in schematischer, vergrößerter Darstellung die Umlenktrommel 5 im Bereich des Umsetzers 6. Die Umlenktrommel 5 weist einen Antriebsflansch 26 auf, in dem das Reibband 10 läuft. Die Oberseite 26a des Antriebsflansches 26 verläuft horizontal und eben und ist in einer derartigen Höhe angeordnet, daß sie mit dem zylindrischen Bereich 15a, 15b der Laufrolle des ankommenden Fördermittels fluchtet bzw., bevorzugt, knapp darunter liegt.

Oberhalb des Antriebsflansches 26 steht vom Umfang der Umlenktrommel 5 ein Fördersteg 27 vor, dessen Durchmesser größer als der Durchmesser des Antriebsflansches 26 ist und dessen Oberseite 27a als korrespondierende Gleitfläche zu den Gleitflächen 20a, 20b des Fördermittels 3 ausgebildet ist. Der Fördersteg 27 ist derart angeordnet, daß er in den Zwischenraum 22a, 22b zwischen den Stegplatten 20a und 23a bzw. 20b und 23b eingreifen kann, wenn das Fördermittel 3 an der Umlenktrommel 6 angekommen ist. Der Fördersteg 27 rotiert um die senkrechte Achse 5a der Umlenktrommel 5 und nimmt das mit seiner jeweils anliegenden Gleitfläche 20a bzw. 20b auf dem Fördersteg 27 aufsitzende Fördermittel 3 mit.

Oberhalb des Fördersteges 27 ist ein feststehender Führungssteg 28 vorgesehen, der sich annähernd halbkreisförmig von etwa dem Punkt, wo das Reibband 10 den Antriebsflansch 26 trifft bis zu dem Punkt, wo das Reibband 10 den Antriebsflansch 26 verläßt, um den Umfang der Umlenktrommel 5 erstreckt und nach unten vorsteht. Die Innenfläche 28a des Führungssteges 28 ist als Führung für die Stegfläche 25a, 25b des Längssteges 25 des Fördermittels 3 ausgebildet und hält das Fördermittel 3 gegen Zentrifugal- und andere Kräfte auf der Umlenktrommel 5. Dieser Führungssteg 28 ist im Bereich des Umsetzers 6 unterbrochen (vgl. Fig. 4). An der gleichen Stelle ist die Schiene 4b der zweiten Schienenanordnung 2b mit einer Ausfräsung 29 versehen, die so tief geht, daß zumindest der schräge Bereich der Lauffläche 7 dieser Schiene 4b entfernt wurde.

Der Umsetzer 6 weist einen Drücker 30 mit zwei nach unten vorstehenden Stegen 30a, 30b auf, der in Richtung des Doppelpfeiles B (Fig. 3) bewegbar ist. Die Bewegung des Drückers 30 des Umsetzers 6 erfolgt derart, daß in der in Fig. 4 dargestellten Stellung der in Fig. 3 rechte Steg 30b die Lücke im Führungssteg 28 der Umlenktrommel 5 schließt, so daß das Fördermittel 3 um die Umlenktrommel 5 herumgeführt wird, und wobei die bezüglich der Drehachse 5a außenliegende Stegfläche 25a des Langssteges 25 des Fördermittels 3 am Führungssteg 28 und am Steg 30b des Drückers 30 anliegt, wobei der Steg 30a des Drückers 30 aus dem Weg des Längssteges 25 herausbewegt ist.

In der zweiten Endstellung des Drückers 30 ist der der Drehachse 5a der Umlenktrommel 5 zugewandte Steg 30a des Drückers 30 so angeordnet, daß er mit der der Drehachse 5a zugewandten Stegfläche 25a des Längssteges 25 in Eingriff kommt. Der weitere Verlauf des Steges 30a zwingt dann das Fördermittel 3 in eine Bewegung in Richtung auf die Schiene 4b, so daß das Fördermittel 3 mit der bis- lang nicht in Eingriff stehenden Laufrolle, der Laufrolle 12a im dargestellten Ausführungsbeispiel, durch die Ausfräsung 29 auf die Schiene 4b übertritt, außer Eingriff mit dem Fördersteg 27 gelangt und somit auf der Schiene 4b verbleibt, während sich der Fördersteg 27 weiterdreht. Auf der Schiene 4b kommt das Fördermittel 3 dann in Eingriff mit einem analog des Reibbandes 10 ausgebildeten Reibband 10b der Schiene 4b und wird von diesem aus der Ausfräsung 29 gefördert.

Die Bewegung des Drückers 30 erfolgt bevorzugt um eine senkrechte Achse, lineare Bewegungen sind jedoch auch möglich.

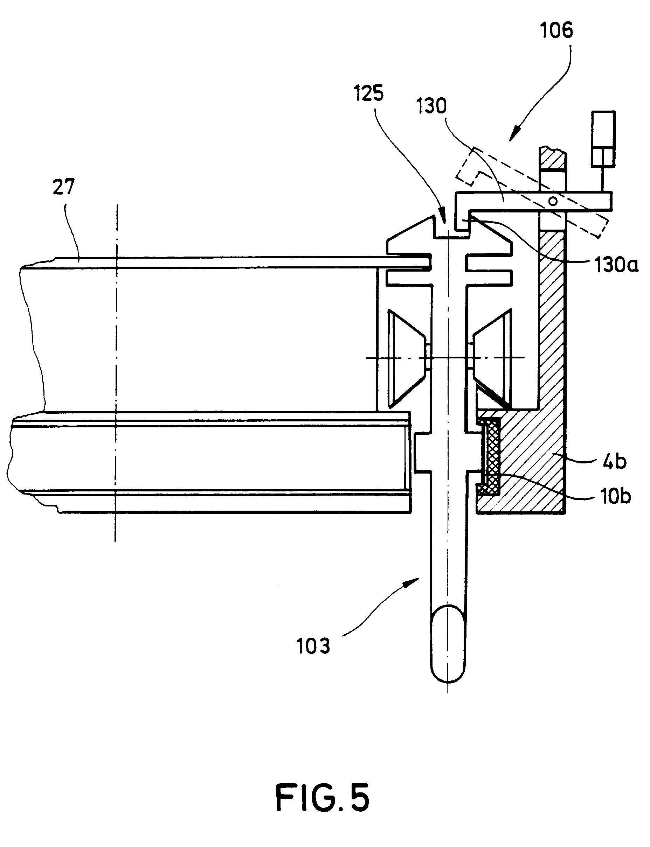

Fig. 5 zeigt ein weiteres Ausführungsbeispiel eines Umsetzers 106, der sich vom Umsetzer 6 lediglich dadurch unterscheidet, daß anstelle des Drückers eine von oben in den Förderweg eines leicht abgewandelten Fördermittels 103 einschwenkbare Kippführung 130 vorgesehen ist. Das Fördermittel 103 unterscheidet sich vom Fördermittel 3 der Fig. 1 - 4 lediglich dadurch, daß anstelle eines Längssteges eine Langsnut 125 vorgesehen ist, in die ein Führungssteg 130a der Kippführung 130 eingreifen kann, während das Fördermittel 103 auf dem Fördersteg 27 der Umlenktrommel 5 gefördert wird. Wenn die Kippführung 130 mit ihrem Führungssteg 130a in die Längsnut 125 eingeschwenkt ist, wird das Fördermittel 103 auf der Schiene 4b zurückgehalten und in Eingriff mit dem Reibband 10b dieser Schiene 4b gezogen, während sich der Fördersteg 27 weiterbewegt. Steht der Führungssteg 130a nicht in Eingriff mit der Längsnut 125, wird das Fördermittel 103 durch den Fördersteg 27, gegebenenfalls unterstützt durch eine dem Fördersteg 28 nachgebildete Führung, um die Umlenktrommel herumbewegt.

Im Betrieb der erfindungsgemäßen Hängefördereinrichtung laufen die Fördermittel 3 bzw. 103 auf der Schiene 4a des ersten Schienenkreises 2a, wie in Fig. 1 gezeigt, wobei die Laufrolle 12b in Eingriff mit der Schiene 4a steht. Die gegenüberliegende Laufrolle 12a ist frei. Der Antrieb erfolgt über die am Reibband 10 anliegende Gleitfläche 16b, durch die gleichzeitig die Symmetrieebene 13 in ihrer im wesentlichen senkrechten Ausrichtung gehalten wird. Da zur Verminderung der Reibung die Spitze 7a der Laufbahn 7 in der Kehle 14b der Laufrolle 12b laufen soll, kann es zweckmäßig sein, die als Anlagefläche dienende Reibfläche 16b (und ebenso 16a) in einem geringfügig geringeren Abstand zur Symmetrieebene 13 als die Kehle 14a, 14b vorzusehen, so daß sich das Lagerteil 11 bzw. 111 ganz leicht neigt und die Umfangsfläche der Laufrolle 12b leicht von der Laufbahn abgehoben wird.

Gelangt das Fördermittel 3, 103 in den Bereich der Umlenktrommel 5, so taucht der Förderflansch 27 in den Zwischenraum 22b zwischen den beiden Stegplatten 21b und 22b. Gelangt dann die Laufrolle 12b von der Schiene 4a auf die Oberseite 26a des Antriebsflansches 26, so legt sich die Gleitfläche 20b auf die Förderfläche 27a des Fördersteges 27 auf und das Fördermittel 3, 103 wird bei der Drehung des Förderflansches 27 mitgenommen.

Soll das Fördermittel 3 vom ersten Teil 2a des Schienenwegs 2 auf den zweiten Teil 2b des Schienenwegs 2 umgesetzt werden, so wird der Drücker 30 in eine Stellung verfahren, in der der Steg 30a des Drückers 30 dem Fördermittel 3 den Weg um die Umlenktrommel 5 versperrt. Die Stegfläche 25b des Längssteges 25 kommt mit dem Steg 30a in Eingriff, so daß das Fördermittel 3 vom Fördersteg 27 nach außen verschoben wird und seine freie, bis- her nicht in Eingriff stehende Laufrolle 12a in die Ausfräsung 29 eintritt und auf die zweite Schiene 4b gelangt. Dabei ist der Radius der Ausfräsung 29 bevorzugt an den Radius der Umlenktrommel 5 angepaßt, so daß sich das Fördermittel 3 auf der zweiten Schiene 4b befindet und dort durch die schräge Laufbahn der zweiten Schiene 4b gehalten wird, sobald das zweite Laufsystem 19 vom Fördersteg 27 freigekommen ist. Dann steht auch die Reibfläche 16a mit dem Reibband 10b der zweiten Schiene 4b in Eingriff, so daß das Fördermittel 3 wie beschrieben, auf der zweiten Schiene 4b, diesmal jedoch auf der anderen Laufrolle 12a hängend, transportiert werden kann.

Soll nicht umgesetzt werden, so wird der Drücker 30 in eine Stellung bewegt, in der der Steg 30b die Lücke zwischen den beiden Teilen des Führungsstegs 28 der Umlenktrommel 5 schließt, so daß das Fördermittel über das zweite Laufsystem 19 um die Umlenktrommel 5 bis an eine Stelle transportiert werden kann, wo sich eine weitere, gerade Schiene anschließt, auf der das Fördermittel wieder über die gleiche Laufrolle 12b transportiert werden kann.

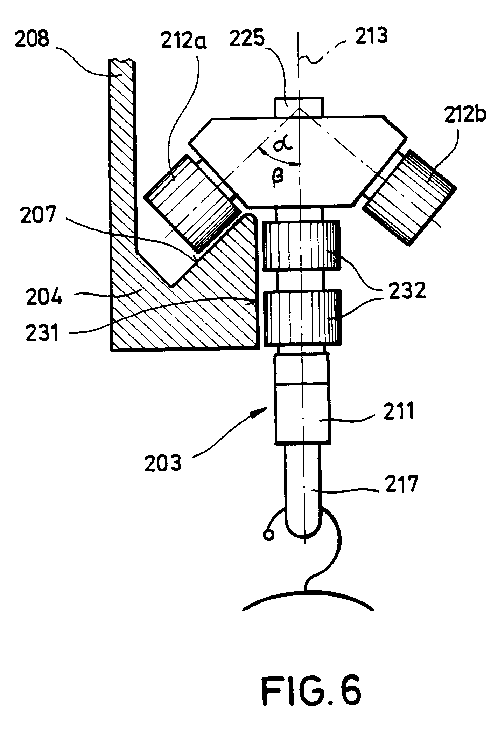

Fig. 6 zeigt ein weiteres Ausführungsbeispiel eines Fördermittels 203, das ebenso wie die bereits beschriebenen Fördermittel ein sich senkrecht erstreckendes Lagerteil 211 aufweist, an dem symmetrisch bezüglich einer Symmetrieebene 213 zwei Laufrollen 212a und 212b seitlich wegstehen, wobei sich das Lagerteil 211 in der Symmetrieebene 213 zwischen den Laufrollen 212a und 212b erstreckt. Die Laufrollen 212a, 212b sind zylindrisch und über nach unten weisende, mit der Symmetrieebene 213 einen spitzen Winkel α einschließenden Drehachsen am Lagerteil 211 drehbar gelagert.

Das Fördermittel 203 läuft auf einer Schiene 204, die sich von der Schiene 4 nur unwesentlich durch ihre etwas größere Breite unterscheidet, die zum Abrollen der zylindrischen Laufrollen 212a, 212b genügend Freiraum bietet. Auch die Schiene 204 weist eine unter dem Winkel α schräg laufende Laufbahn 207 auf, auf der jede der Laufrollen 212a, 212b abrollen kann. Die Schiene 204 ist asymmetrisch und über einen Träger 208 abgehängt. An der dem Träger 208 abgewandten, dem Lagerteil 211 zugewandten Seite enthält die Schiene 204 eine im wesentlichen parallel zur Symmetrieebene 213 verlaufende Abstützfläche 231, auf der zylindrische Abstützrollen 232 abrollen können, die mit senkrechten Drehachsen am Lagerteil 211 gelagert sind. Die auf der Abstützfläche 231 abrollenden Laufrollen 232 wirken in gleicher Weise wie die Kombination aus Reibflächen und Reibband der vorangegangenen Ausführungsbeispiele, d.h. sie dienen dazu, die Symmetrieebene 211 im wesentlichen in ihrer senkrechten Ausrichtung zu halten, wenn das Fördermittel über die Schiene geführt wird.

Auch das Lagerteil 211 ist in bereits beschriebener Weise mit einem Haken 217 zum Anhängen von zu fördernden Gegenständen sowie mit einem Führungsvorsprung 225 versehen, der zum Sichern des Fördermittels 203, beispielsweise bei Kurvenfahrt, in eine Führung eintauchen kann. Der Antrieb des Fördermittels 203 erfolgt durch bekannte Antriebe, beispielsweise an Ketten angeordnete Mitnehmer oder dgl.

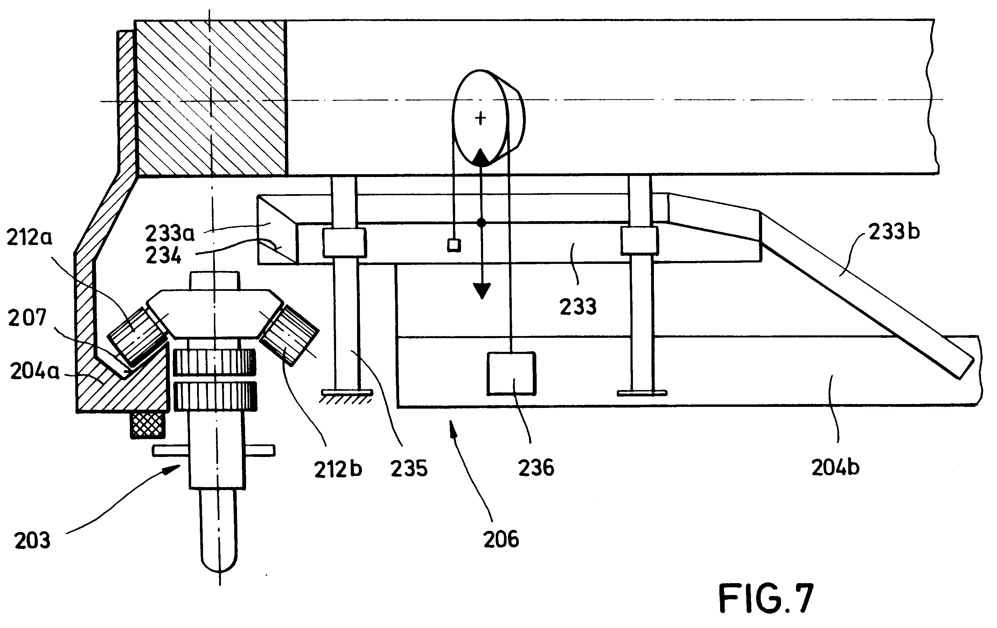

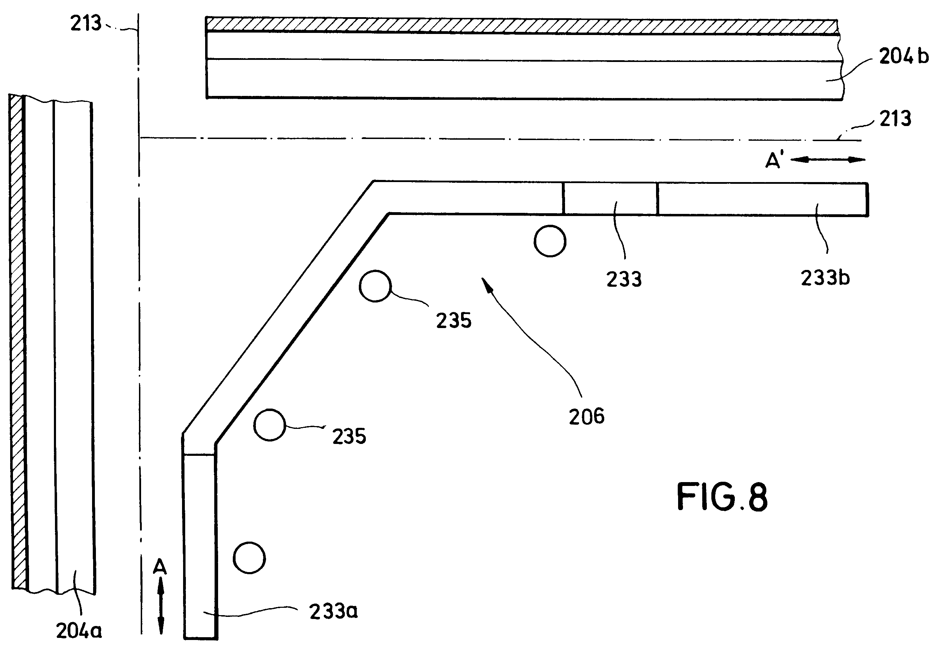

Die Fig. 7 und 8 beschreiben ein weiteres Ausführungsbeispiel eines Umsetzers 206, der zwar in Verbindung mit dem Fördermittel 203 der Fig. 6 beschrieben wurde, jedoch nicht auf die Verwendung zusammen mit diesem Fördermittel beschränkt ist. Der Umsetzer 206 dient zum Umsetzen des Fördermittels 203 von einer ersten geradlinigen Schiene 204 auf eine zweite geradlinige Schiene 204b, die sich im Winkel, im dargestellten Ausführungsbeisspiel 90°, zur ersten Schiene 204 erstreckt und auf gleicher Höhe mit ihr angeordnet ist. Der Umsetzer 206 weist einen Weichenschenkel 233 auf, der als Schienenstück zum Abrollen des Fördermittels 203 ausgebildet ist und ebenso wie die Schienen 204 eine unter dem Winkel α geneigte Laufbahn 234 aufweist. Der Weichenschenkel 233 führt aus der Richtung der ersten Schiene 204a in die Richtung der zweiten Schiene 204b, wobei ein erstes freies Ende 233a parallel zur ersten Schiene 204a und ein zweites freies Ende 233b parallel zur zweiten Schiene 204b verläuft. Der Weichenschenkel 233 ist über senkrechte Führungsstangen 235 aus einer ersten Position, in der der Weichenschenkel 233 sich unwirksam oberhalb des auf den Schienen laufenden Fördermittels 203 befindet, in eine zweite Position nach unten bewegbar, in der die freien Enden 233a bzw. 233b des Weichenschenkels in den Weg des Fördermittels 203 ragen, und zwar in etwa dem gleichen Abstand zur Symmetrieebene 213 wie die ersten und zweiten Schienen 204a, 204b. Auf diese Weise gelangt jedes Fördermittel 203, das beispielsweise mit seiner linken Laufrolle 212a auf der ersten Schiene 204a in Förderrichtung A in den Bereich des Umsetzers 206 einfährt, zwangsläufig mit seiner rechten Laufrolle 212b auf das freie Ende 233a des Weichenschenkels 233. Das freie Ende 233a des Weichenschenkels 233 ist als Auflauframpe ausgebildet und führt das Fördermittel 203 soweit nach oben, bis die linke Laufrolle 212a über dem obersten Bereich der Laufbahn 207 angehoben ist, so daß das Fördermittel 203 aus der ersten Schiene 204a ausgehoben wird und auf den Weichenschenkel 233 übertritt. Auf diesem wird das Fördermittel 203 in die Richtung der zweiten Schiene 204b umgelenkt und gelangt auf das zweite freie Ende 233b, das als Ablauframpe dient. Auf dieser Ablauframpe 233b wird das Fördermittel 203 nach unten geleitet, bis die linke Laufrolle 212a mit der Laufbahn 207 der zweiten Schiene 204b in Eingriff tritt. Danach kann das Fördermittel 203 in Förderrichtung A' in Richtung des Doppelpfeiles, in Fig. 8 nach rechts, gefördert werden. Kommt ein Fördermittel 203 in Fig. 8 von rechts auf der Schiene 204b an, so kann es in analoger Weise auf die erste Schiene 204a übergeleitet werden. Um zu verhindern, daß auf der zweiten Schiene ankommende Fördermittel 203 am Ende der zweiten Schiene 204b aus dem Schienenweg fallen, kann das freie Ende 233b des Weichenschenkels 233 so lang und so schräg ausgebildet sein, daß es auch bei hochgehobenem, also unwirksamen Weichenschenkel 233 noch in den Weg des Fördermittels 203 auf der zweiten Schiene 204b ragt, so daß die auf der zweiten Schiene 204b gerade nicht in Eingriff stehende Laufrolle des Fördermittels 203 auf dieses freie Ende 233b auflaufen muß. Für diese Funktion wird der Weichenschenkel 233 mit einem Gegengewicht 236 belastet aufgehängt, wobei das Gegengewicht 236 so bemessen wird, daß der Weichenschenkel 233 durch das Gewicht eines von der Schiene 204b auf das zweite freie Ende 233b auflaufenden Fördermittels 203 nach unten in seine wirksame Position gezogen wird, in der das erste freie Ende 233a sich auf das Niveau der ersten Schiene 204a bewegt. Soll hingegen der mit dem Gegengewicht 236 belastete Weichenschenkel 233 ein auf der Schiene 204a ankommendes Fördermittel 203 umsetzen, so reicht es aus, den Weichenschenkel 233 per Hand nach unten zu ziehen. Sobald sich das Fördermittel 203 auf diesen Weichenschenkel 233 befindet, wird dieser durch das Gewicht des Fördermittels 203 in seiner wirksamen Position gehalten. Nachdem das Fördermittel 203 den Weichenschenkel 233 verlassen hat, gelangt dieser unter dem Einfluß des Gegengewichtes 236 wieder in seine unwirksame Position.

Durch die Kombination eines symmetrischen Fördermittels mit einer asymmetrischen Schiene ist es somit möglich, das Fördermittel ohne großen konstruktiven Aufwand in die unterschiedlichsten Richtungen zu bewegen. So ist es beispielsweise möglich, zwei geschlossene Förderkreise in Form einer Acht aneinander anzuschließen, wobei das Fördermittel im ersten Förderkreis auf der einen Laufrolle und im zweiten Förderkreis auf der anderen Laufrolle läuft. Mit den Umsetzern 6 und 106 in Verbindung mit der Umlenkrolle 5 können die Fördermittel in jedem der Förderkreise einzeln umlaufen bzw. nach Wahl vom ersten Förderkreis in den zweiten Förderkreis umgesetzt werden, wobei durch den Umsetzer 6 bzw. 106 besonders kurze Umsetzzeiten möglich sind, so daß auch einzelne Fördermittel aus dem Förderkreislauf einer Vielzahl kurz hintereinander folgender Fördermittel umgesetzt werden können.

Durch die Möglichkeit, die Fördermittel wahlweise auf der einen oder der anderen Laufrolle laufen zu lassen, können bestehende Schienenwege auf einfache Weise erweitert werden. Wie insbesondere in den Fig. 7 und 8 gezeigt, können Abzweigungen zusätzlich in einen bereits bestehenden Schienenweg eingebaut werden, ohne daß Schienenstücke aus dem bereits bestehenden Schienenweg herausgenommen werden müssen, wie das für konventionelle Weichen notwendig ist. Für einfache Abzweigungen ohne Weichenfunktion, reicht es darüber hinaus aus, die Abzweigungsschiene im Bogen, analog des Weichenschenkels, an die ersten Schiene heranzuführen und sie zumindest so lange parallel zur ersten Schiene verlaufen zu lassen, wie erforderlich, um das Fördermittel aus der ersten Schiene auszuheben.

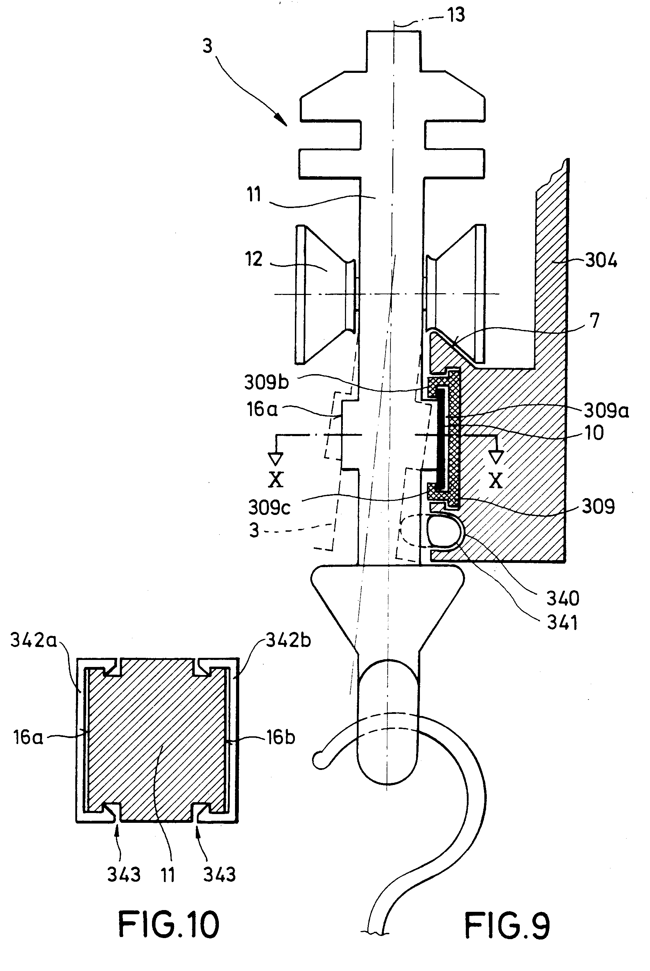

Fig. 9 zeigt das Fördermittel 3 aus Fig. 2, wobei gleiche bzw. vergleichbare Bauteile mit den gleichen Bezugszeichen gekennzeichnet und nicht nochmals erläutert sind. Es ist wiederum eine Schiene 304 vorgesehen,die sich von der Schiene 4 der Fig. 1 durch eine abweichende Führung 309 unterscheidet. Die Führung 309 weist einen Aufnahmehohlraum 309a für das unveränderte Reibband 10 auf, der in Richtung auf das Fördermittel 3 durch einen oberen Begrenzungsflansch 309b und einen unteren Begrenzungsflansch 309c begrenzt wird. Die Flansche 309b und 309c erstrecken sich senkrecht zur Zeichnungsebene entweder über die gesamte Länge des Aufnahmehohlraums 309 oder nur bereichsweise. In Richtung der Erstreckung der Symmetrieebene 13 des Fördermittels 3 und in Richtung der Breite des Reibbandes 10 ist der obere Flansch 309b höher als der untere Flansch 309c. Der Aufnahmehohlraum 309a ist in dieser Richtung etwa so hoch, wie es der Breite des Reibbandes 10 zuzüglich der Höhe des unteren Flansches 309c entspricht, so daß beide Flansche 309b und 309c sich über die Längskanten des Reibbandes 10 erstrecken, wenn das Reibband 10 in der Führung 309 aufgenommen ist und unter Wirkung der Schwerkraft am unteren Ende des Aufnahmehohlraums 309a auf der Führung 309 aufsteht. Wird das Reibband 10 jedoch nach oben, d.h. in Richtung auf die Laufbahn 7 verschoben, so liegt der untere Längsrand des Reibbandes 10 oberhalb des unteren Flansches 309c, so daß das Reibband 10 mit seiner unteren Längskante über den unteren Flansch 309c nach außen gekippt und danach unter dem oberen Flansch 309b hervorgezogen werden kann. Zum Einsetzen des Reibbandes 10 wird umgekehrt verfahren. Auf diese Weise ist es möglich, das Reibband aus der Führung 309 herauszunehmen, obwohl es im Betrieb sicher an Ort und Stelle gehalten ist.

Unterhalb der Führung 309 für das Reibband 10 ist in der Schiene 304 eine Ausnehmung 340 ausgeformt, die in Richtung auf das Fördermittel 3 offen ist. In der Schiene ist ein formveränderbarer Körper 341 aufgenommen, der bevorzugt als aufblasbarer Schlauch ausgebildet ist. In schlaffem Zustand steht der Schlauch nicht mit dem Fördermittel 3 in Eingriff. Wird der Schlauch 341 aufgeblasen, so dehnt er sich bis in die gestrichelt gezeichnete Position aus, kommt mit dem Fördermittel 3 in Kontakt und hebt das Fördermittel 3 in die gestrichelt angedeutete Position vom Reibband 10 ab, wobei das Fördermittel 3 um einen in der Nähe der Drehachse der Laufrollen 12 liegenden Drehpunkt quer zur Föderrichtung verkippt wird. In dieser Stellung wird das Fördermittel 3 nicht mehr länger vom Reibband 10 mitgenommen, so daß es beispielsweise zum Abnehmen ungehindert von Hand zu ergreifen ist. Der aufblasbare Schlauch 341 kann nur bereichsweise an geeigneten Stellen vorgesehen sein oder sich über die gesamte Förderstrecke erstrecken.

Fig. 10 zeigt eine weitere Abwandlung des Fördermittels 3 aus Fig. 9, bei der auf den Reibflächen 16a und 16b zusätzlich Reibmaterialstücke 342a und 342b angeordnet wurden. Die Reibmaterialstücke 342a und 342b sind als Rastklammern ausgebildet und lösbar in Nuten 343 am Träger 11 eingeklipst. Die Reibmaterialstücke 342a und 342b bedecken bevorzugt die gesamten Reibflächen 16a und 16b und dienen einem verbesserten Reibschluß zwischen dem Fördermittel 3 und dem Reibband 10, was beispielsweise in Förderstrecken zweckmäßig ist, die über vertikal zueinander versetzte Ebenen verlaufen, d.h. Gefällstrecken und Anstiege enthalten. Wird das Fördermittel 3 speziell für derartige Förderstrecken ausgelegt, so kann das Reibmaterial auch fest mit dem Fördermittel verbunden sein. Wird das Fördermittel immer mit der gleichen Laufrolle über die Gefällstrecken und Anstiege geführt, so kann das zusätzliche Reibmaterial auch nur auf einer der beiden Reibflächen angeordnet sein.

In weitere Abwandlung der beschriebenen und gezeichneten Ausführungsbeispiele können anhand der einzelnen Fig. beschriebene Einzelheiten untereinander ausgetauscht werden. So kann beispielsweise auch das Fördermittel gemäß Fig. 2 mit den um schräge Achsen rotierenden Laufrollen gemäß Fig. 6 versehen sein. Außerdem können die Umfangsflächen der Laufrollen leicht ballig ausgebildet sein, um die Kurvengängigkeit zu verbessern. Schließlich kann auch das Fördermittel gemäß Fig. 6 mit einer zweiten Laufeinrichtung versehen sein. Anstelle des Hakens als Trageinrichtung können in bekannter Weise zwei Fördermittel durch eine Quertraverse zu einem Förderwagen verbunden werden.

## Patentansprüche

1. Hängefördereinrichtung (1) mit einem auf einem Schienenweg (2) mit Geradstrecken, Kurven und/oder Weichen abrollenden Fördermittel (3), wobei das Fördermittel einen mit einem Tragteil (17) für die zu fördernden Gegenstände verbundenen Lagerteil (11) und wenigstens zwei bezüglich einer Symmetrieebene (13) symmetrisch zueinander am Lagerteil (11) angeordnete Laufrollen (12a, 12b) aufweist, und der Schienenweg (2) wenigstens eine Laufbahn (7) zum Abrollen einer der Laufrollen (12a, 12b) hat, **dadurch gekennzeichnet**, daß der Lagerteil (11, 211) sich in der Symmetrieebene (13, 213) erstreckt und die Laufrollen (12a, 12b, 212a, 212b) vom Lagerteil (11, 211) beidseitig nach außen wegstehen, daß das Fördermittel (3, 103, 203) und der Schienenweg (2) für einen Betrieb über Geradstrecken, Kurven und/oder Weichen in Seitenabhängung ausgebildet sind, wobei die Symmetrieebene (13, 213) durch eine zwischen dem Fördermittel (3, 103, 203) und dem Schienenweg (2) vorgesehene Abstützeinrichtung (16a, 16b, 232) im wesentlichen senkrecht gehalten wird und das Fördermittel (3, 103, 203) auf jeweils nur einer Laufbahn (7, 207) abrollt, wobei wahlweise die auf der einen oder auf der anderen Seite der Symmetrieebene (13, 213) angeordnete Laufrolle (12a, 212a bzw. 12b, 212b) auf der Laufbahn (7, 207) abrollt, während die jeweils auf der gegenüberliegenden Seite der Symmetrieebene (13, 213) angeordnete Laufrolle (12b, 212b bzw. 12a, 212a) nicht in Eingriff mit einer Laufbahn (7, 207) steht.

2. Hängefördereinrichtung nach Anspruch 1, **dadurch gekennzeichnet**, daß die Mantellinie wenigstens eines Teils der Umfangsfläche der Laufrollen (12a, 12b, 212a, 212b) mit der Symmetrieebene (13, 213) einen spitzen Winkel (α) einschließt.

3. Hängefördereinrichtung nach Anspruch 2, **dadurch gekennzeichnet**, daß die Laufbahn (7, 207) unter einem korrespondierenden Winkel (α) vom Fördermittel (3, 103, 203) weg nach unten geneigt ist.

4. Hängefördereinrichtung nach Anspruch 2 oder 3, **dadurch gekennzeichnet**, daß die Laufrollen (12a, 12b) als Kegelstumpf ausgebildet und mit ihren schmaleren Enden der Symmetrieebene (13) zugewandt sind.

5. Hängefördereinrichtung nach Anspruch 2 oder 3, **dadurch gekennzeichnet**, daß die Laufrollen (212a, 212b) zylindrisch ausgebildet und mit einer im spitzen Winkel (α) zur Symmetrieebene (213) geneigten Drehachse mit dem Lagerteil (211) verbunden sind.

6. Hängefördereinrichtung nach einem der Ansprüche 1 bis 5, **dadurch gekennzeichnet**, daß die Abstützeinrichtung eine am Lagerteil (211) drehbar angeordnete Stützrolle (232) und eine am Schienenweg (2) angeordnete Abstützfläche (231) aufweist.

7. Hängefördereinrichtung nach einem der Ansprüche 1 bis 5, **dadurch gekennzeichnet**, daß die Abstützeinrichtung jeweils am Fördermittel (3, 103) und am Schienenweg (2) angeordnete Abstützflächen (16a, 16b, 10) enthält.

8. Hängefördereinrichtung nach einem der Ansprüche 1 bis 7, **dadurch gekennzeichnet**, daß die Abstützeinrichtung als Antrieb für das Fördermittel (3, 103) ausgebildet ist.

9. Hängefördereinrichtung nach Anspruch 8, **dadurch gekennzeichnet**, daß der Antrieb ein Reibantrieb mit einem in Förderrichtung (A) parallel zum Schienenweg (2) laufenden Reibband (10) und einer am Fördermittel (3, 103) angeordneten Reibfläche (16a, 16b) ist.

10. Hängefördereinrichtung nach Anspruch 9, **dadurch gekennzeichnet**, daß die Reibfläche (16a, 16b) mit seitlichem Abstand und parallel zur Symmetrieebene (13) am Lagerteil (11) angeordnet ist.

11. Hängefördereinrichtung nach einem der Ansprüche 1 bis 10, **dadurch gekennzeichnet**, daß am Fördermittel (3, 103) im Abstand zu den Laufrollen (12a, 12b) eine weiteren Laufeinrichtung (19) vorgesehen ist, die mit einer korrespondierenden Förderfläche (27a) am Schienenweg (2) in Eingriff bringbar ist.

12. Hängefördereinrichtung nach Anspruch 11, **dadurch gekennzeichnet**, daß die weitere Laufeinrichtung (19) zwei symmetrisch zur Symmetrieebene (13) und senkrecht zu ihr angeordnete, nach unten weisende Gleitflächen (20a, 20b) aufweist, die jeweils wahlweise mit der nach oben weisenden, korrespondierenden Förderfläche (27a) am Schienenweg (2) in Eingriff bringbar sind.

13. Hängefördereinrichtung nach einem der Ansprüche 1 bis 12, d**adurch gekennzeichnet**, daß am Fördermittel (3, 103, 203) eine Kippsicherung (23a, 23b, 24a, 24b) vorgesehen ist.

14. Hängefördereinrichtung nach einem der Ansprüche 1 bis 13, **dadurch gekennzeichnet**, daß im Schienenweg (2) ein Umsetzer (6, 106, 206) zum Überleiten des Fördermittels (3, 103, 203) von einer ersten Schiene (4a, 204a) auf eine zweite Schiene (4b, 204b) vorgesehen ist.

15. Hängefördereinrichtung nach Anspruch 14, **dadurch gekennzeichnet**, daß der Umsetzer (206) einen Weichenschenkel (233) aufweist, der in und aus einer Position bewegbar ist, in der ein freies Ende (233a, 233b) des Weichenschenkels (233) in den Förderweg der freien Laufrolle (212a, 212b) eines auf einer Schiene (204a, 204b) ankommenden Fördermittels (203) ragt und sein weiteres freies Ende (233b, 233a) an eine weitere Schiene (204b, 204a) anschließt.

16. Hängefördereinrichtung nach Anspruch 15, **dadurch gekennzeichnet**, daß die freien Enden (233a, 233b) des Weichenschenkels (233) als Auf- oder Auslauframpe zum Ausheben bzw. Absenken des Fördermittels (203) ausgebildet sind.

17. Hängefördereinrichtung nach Anspruch 14, **dadurch gekennzeichnet**, daß der Umsetzer (6, 106) eine Zwangsführung (30, 130) für das Fördermittel (3, 103) enthält.

18. Hängefördereinrichtung nach Anspruch 17, **dadurch gekennzeichnet**, daß die Zwangsführung einen quer zur Symmetrieebene (13) bewegbaren Drücker (30) umfaßt.

19. Hängefördereinrichtung nach Anspruch 17 oder 18, **dadurch gekennzeichnet**, daß die Zwangsführung (30) einen in eine Nut (30a, 30b) eingreifenden Vorsprung (25) enthält, wobei eines dieser Teile am Fördermittel (3) und das andere am Schienenweg (2) angeordnet ist.

20. Hängefördereinrichtung nach einem der Ansprüche 17 bis 19, **dadurch gekennzeichnet**, daß der Zwangsführung (30), 130) eine Förderbahn (27a) für die weitere Laufeinrichtung (19) zugeordnet ist.

21. Hängefördereinrichtung nach einem der Ansprüche 1 bis 20, **dadurch gekennzeichnet**, daß im Schienenweg (2) eine Umlenkstelle zum Ändern der Förderrichtung vorgesehen ist, die eine Umlenktrommel (5) mit einer Förderfläche (27a) für die weitere Laufeinrichtung (19) aufweist.

22. Hängefördereinrichtung nach Anspruch 21, **dadurch gekennzeichnet**, daß die Förderfläche (27a) um die Achse (5a) der Umlenktrommel (5) rotiert und daß das Fördermittel (3) mit seiner Gleitfläche (20a, 20b) auf der Förderfläche (27a) aufliegt und mitgenommen wird.

23. Hängefördereinrichtung nach Anspruch 21 oder 22, **dadurch gekennzeichnet**, daß im Bereich der Umlenktrommel (5) ein Führungssteg (28) für das Fördermittel (3, 103) vorgesehen ist.

24. Hängefördereinrichtung nach einem der Ansprüche 21 bis 23, **dadurch gekennzeichnet**, daß im Bereich der Umlenktrommel (5) einer der Umsetzer (6, 106) angeordnet ist.

25. Hängefördereinrichtung nach Anspruch 23 und 24, **dadurch gekennzeichnet**, daß der Umsetzer (6, 106) eine Zwangsführung enthält, die zwei auf einem Drücker (30) angeordnete Stege (30a, 30b) aufweist, die wahlweise derart zum Führungssteg (28) der Umlenktrommel (5) ausrichtbar sind, daß das Fördermittel (3) entweder durch die Umlenktrommel (5) weiter gefördert oder von der Umlenktrommel (5) auf eine zweite Schiene (4b) umgesetzt wird.

26. Hängefördereinrichtung nach einem der Ansprüche 1 bis 25, **gekennzeichnet durch** einen Schieneweg (2) mit wenigstens zwei Schienenkreisen (2a, 2b) für jeweils einen geschlossenen Umlauf eines Fördermittels (3, 103, 203) und einem zwischen den Schienenkreisen angeordneten Umsetzer (6, 106) zum Umsetzen des Fördermittels (3, 103) von einem Schienenkreis (2a, 2b) auf den anderen, wobei beim Umsetzen die mit der Laufbahn (7) in Eingriff stehende Laufrolle (12a, 12b) wechselt.

27. Hängefördereinrichtung nach einem der Ansprüche 9 bis 26, **dadurch gekennzeichnet**, daß das Reibband (10) in einem Aufnahmehohlraum (309a) einer Führung (309) aufgenommen ist, die einen oberen und einen unteren, die jeweiligen Längskanten des Reibbandes (10) übergreifenden, den Aufnahmehohlraum (309a) begrenzenden Haltesteg (309b, 309c) aufweist, wobei die Breite des Aufnahmehohlraums (309a) größer und der Abstand zwischen den Haltestegen (309b, 309c) geringer als die Breite des Reibbandes (10) zwischen seinen Längskanten ist und wobei der oberer Haltesteg (309b) breiter ist als der untere Haltesteg (309c).

28. Hängefördereinrichtung nach einem der Ansprüche 1 bis 27, **dadurch gekennzeichnet**, daß ein formveränderbarer Körper (341) zum Abheben des Fördermittels (3, 103) vom Antrieb (10) vorgesehen ist.

29. Hängefördereinrichtung nach Anspruch 28, **dadurch gekennzeichnet**, daß der formveränderbare Körper (341) ein aufblasbarer Schlauch ist.

30. Hängefördereinricchtung nach Anspruch 28 oder 29, **dadurch gekennzeichnet**, daß der formveränderbare Körper (341) unterhalb der Laufbahn (7) angeordnet ist.

31. Hängefördereinrichtung nach einem der Ansprüche 9 bis 30, **dadurch gekennzeichnet**, daß zwischen dem Fördermittel (3) und dem Reibband (10) ein zusätzliches Reibmaterial (342a, 342b) angeordnet ist.

32. Hängefördereinrichtung nach Anspruch 31, **dadurch gekennzeichnet**, daß das Reibmaterial (342a, 342b) lösbar befestigt ist.

33. Hängefördereinrichtung nach Anspruch 31 oder 32, **dadurch gekennzeichnet**, daß das Reibmaterial (342a, 342b) am Fördermittel (3) angeordnet ist.

## Claims

1. Overhead conveyor system (1) with a conveying means (3) running on a trackway (2) with straight stretches, curves and/or switch points, the said conveying means having a bearing part (11) connected to a carrier part (17) for the articles to be conveyed and having at least two running rollers (12a, 12b) mounted symmetrically on the bearing part (11) with respect to a plane of symmetry (13), and the said trackway (2) having at least one running track (7) on which one of the rollers (12a, 12b) runs, characterized in that the bearing part (11, 211) extends in the plane of symmetry (13, 213) and the running rollers (12a, 12b, 212a, 212b) project outwards on either side of the bearing part (11, 211), [and in] that the conveying means (3, 103, 203) and the trackway (2) are designed for side-suspended operation over straights, curves and/or points, the plane of symmetry (13, 213) being kept essentially perpendicular by a stabilizer device (16a, 16b, 232) provided between the conveying means (3, 103, 203) and the trackway (2) and the conveying means (3, 103, 203) running on only one running track (7, 207) at any given time, with the roller (12a, 212a or, as the case may be, 12b, 212b) located on one or other side of the plane of symmetry (13, 213) running on the running track (7, 207), while the roller (12b, 212b or 12a, 212a, respectively) located on the opposite side of the plane of symmetry (13, 213) is not in engagement with a running track (7, 207).

2. Overhead conveyor system according to Claim 1, characterized in that the generating line of at least a part of the circumferential surface of the running rollers (12a, 12b, 212a, 212b) includes an acute angle (α) with the plane of symmetry (13, 213).

3. Overhead conveyor system according to Claim 2, characterized in that the running track (7, 207) slopes downwards away from the conveying means (3, 103, 203) at a corresponding angle (α).

4. Overhead conveyor system according to Claim 2 or 3, characterized in that the running rollers (12a, 12b) are each in the form of a frustum of a cone with its smaller end towards the plane of symmetry (13).

5. Overhead conveyor system according to Claim 2 or 3, characterized in that the running rollers (212a, 212b) have a cylindrical form and are each connected to the bearing part (211) by an axis of rotation inclined at an acute angle (α) to the plane of symmetry (213).

6. Overhead conveyor system according to any one of Claims 1 to 5, characterized in that the stabilizer device comprises a support roller (232) rotatably mounted on the bearing part (211) and a support face (231) located on the trackway (2).

7. Overhead conveyor system according to any one of Claims 1 to 5, characterized in that the stabilizer device comprises support faces (16a, 16b, 10) respectively located on the conveying means (3, 103) and on the trackway (2).

8. Overhead conveyor system according to any one of Claims 1 to 7, characterized in that the stabilizer device is designed to serve as drive for the conveying means (3, 103).

9. Overhead conveyor system according to Claim 8, characterized in that the drive is a friction drive, with a friction belt (10) running parallel with the trackway (2) in the conveying direction (A) and a friction face (16a, 16b) located on the conveying means (3, 103).

10. Overhead conveyor system according to Claim 9, characterized in that the friction face (16a, 16b) is located on the bearing part (11) and is laterally offset with respect to, and parallel with, the plane of symmetry (13).

11. Overhead conveyor system according to any one of Claims 1 to 10, characterized in that an additional running means (19) is provided on the conveying means (3, 103) at a distance from the running rollers (12a, 12b) and can be brought into engagement with a corresponding conveying face (27a) on the trackway (2).

12. Overhead conveyor system according to Claim 11, characterized in that the additional running means (19) comprises two downwards facing sliding faces (20a, 20b) arranged symmetrically with respect to the plane of symmetry (13) and perpendicularly thereto, either of which can, as required, be brought into engagement with the corresponding upwards facing conveying face (27a) on the trackway (2).

13. Overhead conveyor system according to any one of Claims 1 to 12, characterized in that a tilt preventer (23a, 23b, 24a, 24b) is provided on the conveying means (3, 103, 203).

14. Overhead conveyor system according to any one of Claims 1 to 13, characterized in that a transfer device (6, 106, 206) is provided in the trackway (2) for transferring the conveying means (3, 103, 203) from a first track (4a, 204a) on to a second track (4b, 204b).

15. Overhead conveyor system according to Claim 14, characterized in that the transfer device (206) has a switch bar (233) which can be shifted into and out of a position in which one free end (233a, 233b) of the switch bar (233) projects into the path of the free roller (212a, 212b) of a conveying means (203) approaching on one track (204a, 204b) and its other free end (233b, 233a) connects to another track (204b, 204a).

16. Overhead conveyor system according to Claim 15, characterized in that the free ends (233a, 233b) of the switch bar (233) are constructed as a run-up or run-down ramp to raise or lower the conveying means (203), respectively.

17. Overhead conveyor system according to Claim 14, characterized in that the transfer device (6, 106) comprises a positive guide (30, 130) for the conveying means (3, 103).

18. Overhead conveyor system according to Claim 17, characterized in that the positive guide comprises a pusher (30) which can be shifted at right angles to the plane of symmetry (13).

19. Overhead conveyor system according to Claim 17 or 18, characterized in that the positive guide (30) comprises a projection (25) engaging in a groove (30a, 30b), one of these parts being located on the conveying means (3) and the other on the trackway (2).

20. Overhead conveyor system according to any one of Claims 17 to 19, characterized in that the positive guide (30, 130) is associated with a conveyor track (27a) for the additional running means (19).

21. Overhead conveyor system according to any one of Claims 1 to 20, characterized in that a diversion point for changing the conveying direction is provided in the trackway (2), comprising a divertor drum (5) with a conveying face (27a) for the additional running means (19).

22. Overhead conveyor system according to Claim 21, characterized in that the conveying face (27a) rotates about the axis (5a) of the divertor drum (5) and in that the conveying means (3) rests on, and is entrained by, the conveying face (27a) by its sliding face (20a, 20b).

23. Overhead conveyor system according to Claim 21 or 22, characterized in that a guide web (28) for the conveying means (3, 103) is provided in the region of the divertor drum (5).

24. Overhead conveyor system according to any one of Claims 21 to 23, characterized in that one of the transfer devices (6, 106) is located in the region of the divertor drum (5).

25. Overhead conveyor system according to Claims 23 and 24, characterized in that the transfer device (6, 106) comprises a positive guide which has two webs (30a, 30b) which are arranged on a pusher (30) and which can be selectively aligned with the guide web (28) of the divertor drum (5) so that the conveying means (3) is either conveyed on its way by the divertor drum (5) or transferred by the divertor drum (5) on to a second track (4b).

26. Overhead conveyor system according to any one of Claims 1 to 25, characterized by a trackway (2) with at least two track circuits (2a, 2b) each for a closed circulation of a conveying means (3, 103, 203) and with a transfer device (6, 106) located between the track circuits for transferring the conveying means (3, 103) from one track circuit (2a, 2b) to the other, with the running roller (12a, 12b) in engagement with the running track (7) changing upon transfer.

27. Overhead conveyor system according to any one of Claims 9 to 26, characterized in that the friction belt (10) is contained in a recess (309a) in a guide (309) which has upper and lower retaining webs (309b, 309c) bounding the recess (309a) and clasping the respective longitudinal edges of the friction belt (10), the width of the recess (309a) being greater than, and the distance between the retaining webs (309b, 309c) less than, the width of the friction belt (10) between its longitudinal edges, and the upper retaining web (309b) being wider than the lower retaining web (309c).

28. Overhead conveyor system according to any one of Claims 1 to 27, characterized in that a deformable body (341) is provided for lifting the conveying means (3, 103) off the drive (10).

29. Overhead conveyor system according to Claim 28, characterized in that the deformable body (341) is an inflatable tube.

30. Overhead conveyor system according to Claim 28 or 29, characterized in that the deformable body (341) is located underneath the running track (7).

31. Overhead conveyor system according to any one of Claims 9 to 30, characterized in that an additional friction material (342a, 342b) is arranged between the conveying means (3) and the friction belt (10).

32. Overhead conveyor system according to Claim 31, characterized in that the friction material (342a, 342b) is releasably attached.

33. Overhead conveyor system according to Claim 31 or 32, characterized in that the friction material (342a, 342b) is arranged on the conveying means (3).

## Revendications

1. Installation de convoyeur suspendu (1), comprenant des moyens de transport (3) roulant sur un chemin de rail (2) avec des sections droites, des courbes et/ou des aiguilles, le moyen de transport comportant un élément de support (11) couplé avec un élément porteur (17) pour les objets à transporter, et au moins deux galets de roulement (12a, 12b) disposés sur l'élément de support (11) de manière symétrique par rapport à un plan de symétrie (13), et le chemin de rail (2) présentant au moins une voie de roulement (7) pour le roulement de l'un des galets de roulement (12a, 12b), **caractérisé en ce** que l'élément de support (11, 211) s'étend dans le plan de symétrie (13, 213) et que les galets de roulement (12a, 12b, 212a, 212b) dépassent sur les deux côtés de l'élément de support (11, 211) vers l'extérieur, que le moyen de transport (3, 103, 203) et le chemin de rail (2) sont conçus pour un fonctionnement sur des voies rectilignes, dans des virages et/ou des aiguilles en suspension latérale, le plan de symétrie (13, 213) étant maintenu sensiblement dans le sens vertical par un dispositif de support (16a, 16b, 232) prévu entre le moyen de transport (3, 103, 203) et le chemin de rail (2) et que le moyen de transport (3, 103, 203) roule respectivement sur une seule voie de roulement (7, 207), le galet de roulement (12a, 212a et respectivement 12b, 212b) disposé d'un côté ou de l'autre du plan de symétrie (13, 213) roulant, au choix, sur la voie de roulement (7, 207), tandis que le galet de roulement (12b, 212b et respectivement 12a, 212a) placé respectivement de l'autre côté du plan de symétrie (13, 213) n'est pas en contact avec une voie de roulement (7, 207).

2. Installation de convoyeur suspendu selon la revendication 1, caractérisée en ce que la génératrice d'au moins une partie de la surface périphérique des galets de roulement (12a, 12b, 212a, 212b) forme avec le plan de symétrie (13, 213) un angle aigu (α).

3. Installation de convoyeur suspendu selon la revendication 2, caractérisée en ce que la voie de roulement (7, 207) est inclinée vers le bas, sous un angle (α) correspondant, en s'écartant du moyen de transport (3, 103, 203).

4. Installation de convoyeur suspendu selon la revendication 2 ou 3, caractérisée en ce que les galets de roulement (12a, 12b) sont conformés en tronc de cône et dirigés avec les extrémités plus étroites vers le plan de symétrie (13).

5. Installation de convoyeur suspendu selon la revendication 2 ou 3, caractérisée en ce que les galets de roulement (212a, 212b) sont de forme cylindrique et couplés avec l'élément de support (211) par un axe de rotation incliné sous un angle aigu (α) par rapport au plan de symétrie (213).

6. Installation de convoyeur suspendu selon l'une des revendications 1 à 5, caractérisée en ce que le dispositif de support comprend un galet d'appui (232) monté de manière tournante sur l'élément de support (211), et une surface d'appui (231) sur le chemin de rail (2).

7. Installation de convoyeur suspendu selon l'une des revendications 1 à 5, caractérisée en ce que le dispositif de support comprend des surfaces d'appui (16a, 16b, 10) prévues respectivement sur le moyen de transport (3, 103) et sur le chemin de rail (2).

8. Installation de convoyeur suspendu selon l'une des revendications 1 à 7, caractérisée en ce que le dispositif de support est conformé en entraînement pour le moyen de transport (3, 103).

9. Installation de convoyeur suspendu selon la revendication 8, caractérisée en ce que l'entraînement est une commande à friction avec une bande de frottement (10) déplacée dans la direction de transport (A) parallèlement au chemin de rail (2), et une surface frottante (16a, 16b) prévue sur le moyen de transport (3, 103).

10. Installation de convoyeur suspendu selon la revendication 9, caractérisée en ce que la surface frottante (16a, 16b) est disposée à distance latérale et parallèlement au plan de symétrie (13), sur l'élément de support (11).

11. Installation de convoyeur suspendu selon l'une des revendications 1 à 10, caractérisée en ce que sur le moyen de transport (3, 103), à distance des galets de roulement (12a, 12b), est prévu un système de roulement supplémentaire (19) qui peut être mis en prise avec une surface de transport (27a) correspondante sur le chemin de rail (2).

12. Installation de convoyeur suspendu selon la revendication 11, caractérisée en ce que le système de roulement supplémentaire (19) comprend deux surfaces de glissement (20a, 20b) disposées symétriquement et perpendiculairement au plan de symétrie (13) et dirigées vers le bas, qui peuvent être mises en contact chacune, au choix, avec la surface de transport (27a) correspondante sur le chemin de rail (2), dirigée vers le haut.

13. Installation de convoyeur suspendu selon l'une des revendications 1 à 12, caractérisée en ce que sur le moyen de transport (3, 103, 203) est prévu un dispositif anti-basculement (23a, 23b, 24a, 24b).

14. Installation de convoyeur suspendu selon l'une des revendications 1 à 13, caractérisée en ce que dans le chemin de rail (2) est prévu un dispositif de transfert (6, 106, 206) pour transférer le moyen de transport (3, 103, 203) d'un premier rail (4a, 204a) sur un second rail (4b, 204b).

15. Système convoyeur aérien selon la revendication 14, caractérisée en ce que le dispositif de transfert (206) comprend une branche d'aiguille (233) qui peut être déplacée dans et à partir d'une position dans laquelle une extrémité libre (233a, 233b) de la branche d'aiguille (233) dépasse dans la trajectoire de transport du galet de roulement libre (212a, 212b) d'un moyen de transport (203) arrivant sur un rail (204a, 204b), et dans laquelle l'autre extrémité libre (233b, 233a) se raccorde à un rail supplémentaire (204b, 204a).

16. Installation de convoyeur suspendu selon la revendication 15, caractérisée en ce que les extrémités libres (233a, 233b) de la branche d'aiguille (233) sont conformées en rampe d'entrée ou de sortie pour respectivement le relevage et la descente du moyen de transport (203).

17. Installation de convoyeur suspendu selon la revendication 14, caractérisée en ce que le dispositif de transfert (6, 106) comprend un guidage forcé (30, 130) pour le moyen de transport (3, 103).

18. Installation de convoyeur suspendu selon la revendication 17, caractérisée en ce que le guidage forcé comprend un poussoir (30) déplacable transversalement au plan de symétrie (13).

19. Installation de convoyeur suspendu selon la revendication 17 ou 18, caractérisée en ce que le guidage forcé (30) comprend une saillie (25) qui s'engage dans une rainure (30a, 30b), l'un desdits éléments étant monté sur le moyen de transport (3) et l'autre, sur le chemin de rail (2).

20. Installation de convoyeur suspendu selon l'une des revendications 17 à 19, caractérisée en ce qu'au guidage forcé (30, 130) est associée une voie de transport (27a) pour le système de roulement supplémentaire (19).

21. Installation de convoyeur suspendu selon l'une des revendications 1 à 20, caractérisée en ce que dans le chemin du rail (2) est prévu un point de déviation pour le changement de la direction de transport, qui comprend une poulie de renvoi (5) avec une surface de transport (27a) pour le système de roulement supplémentaire (19).

22. Installation de convoyeur suspendu selon la revendication 21, caractérisée en ce que la surface de transport (27a) tourne autour de l'axe (5a) de la poulie de renvoi (5) et que le moyen de transport (3) repose par sa surface de glissement (20a, 20b) sur la surface de transport (27a) et est entraîné.

23. Installation de convoyeur suspendu selon la revendication 21 ou 22, caractérisée en ce que dans la région de la poulie de renvoi (5) est prévue une nervure de guidage (28) pour le moyen de transport (3, 103).

24. Installation de convoyeur suspendu selon l'une des revendications 21 à 23, caractérisée en ce que dans la région de la poulie de renvoi (5) est monté l'un des dispositifs de transfert (6, 106).

25. Installation de convoyeur suspendu selon les revendications 23 et 24, caractérisée en ce que le dispositif de transfert (6, 106) comprend un guidage forcé avec deux nervures (30a, 30b) situées sur un poussoir (30), lesquelles peuvent être alignées, au choix, par rapport à la nervure de guidage (28) de la poulie de renvoi (5), et que le moyen de transport (3) est transporté par la poulie de renvoi (5) ou bien transféré par la poulie de renvoi (5) sur un second rail (4b).

26. Installation de convoyeur suspendu selon l'une des revendications 1 à 25, caractérisée en ce qu'il comprend un chemin de rail (2) avec au moins deux circuits de rails (2a, 2b) pour respectivement une rotation complète d'un moyen de transport (3, 103, 203), et un dispositif de transfert (6, 106) monté entre les circuits de rails et destiné à transférer le moyen de transport (3, 103) d'un circuit de rail (2a, 2b) sur l'autre, le galet de roulement (12a, 12b) en contact avec la voie de roulement (7) changeant lors du transfert.

27. Installation de convoyeur suspendu selon l'une des revendications 9 à 26, caractérisée en ce que la bande de frottement (10) est logée dans une cavité de réception (309a) d'une glissière (309) qui comprend respectivement une nervure de retenue supérieure et une nervure de retenue inférieure (309b, 309c) recouvrant les bords longitudinaux respectifs de la bande de frottement (10) et délimitant la cavité de réception (309a), la largeur de la cavité de réception (309a) étant plus grande et la distance entre les nervures de retenue (309b, 309c) étant plus petite que la largeur de la bande de frottement (10) entre ses bords longitudinaux, et la nervure de retenue supérieure (309b) étant plus large que la nervure de retenue inférieure (309c).

28. Installation de convoyeur suspendu selon l'une des revendications 1 à 27, caractérisée en ce qu'un corps déformable (341) est prévu pour soulever le moyen de transport (3, 103) de l'entraînement (10).

29. Installation de convoyeur suspendu selon la revendication 28, caractérisée en ce que le corps déformable (341) est un tuyau souple gonflable.

30. Installation de convoyeur suspendu selon l'une des revendications 28 ou 29, caractérisée en ce que le corps déformable (341) est disposé au-dessous de la voie de roulement (7).

31. Installation de convoyeur suspendu selon l'une des revendications 9 à 30, caractérisée en ce qu'entre le moyen de transport (3) et la bande de frottement (10) est disposé un matériau de friction supplémentaire (342a, 342b).

32. Installation de convoyeur suspendu selon la revendication 31, caractérisée en ce que le matériau de friction (342a, 342b) est fixé de manière amovible.

33. Installation de convoyeur suspendu selon la revendication 31 ou 32, caractérisée en ce que le matériau de friction (342a, 342b) est monté sur le moyen de transport (3).
